# EUROPEAN PATENT APPLICATION

(11) **EP 3 462 003 A1**
(43) Date of publication of application: **03.04.2019**
(21) Application number: 17382647.0
(22) Date of filing: 29.09.2017
(51) Int. Cl.: F01N 5/02

(54) **HEAT RECOVERY SYSTEM**

(71) Applicant: BORGWARNER EMISSIONS SYSTEMS SPAIN, S.L.U., 36315 Vigo Pontevedra (ES)
(72) Inventor: GARCÍA GONZÁLEZ, Salvador, E-36307 Belesar-Baiona, Pontevedra (ES); HERMIDA DOMÍNGUEZ, Xoan Xosé, E-36380 Gondomar - Pontevedra (ES); TENIENTE MOLINOS, Jorge, E-36320 Chapela-Redondela, Pontevedra (ES); LAGO LÓPEZ, David, E-15142 Arteixo, A Coruña (ES); OTERO VÁZQUEZ, Ana, E-27500 Chantada - Lugo (ES); SOTELO ÁLVAREZ, Anxo, E-32970 Ourense (ES)
(74) Representative: ABG Intellectual Property Law, S.L.

(57) **Abstract**

The present invention relates to a heat recovery system for internal combustion engines which is arranged in an exhaust gas conduit. The system allows transferring heat from the exhaust gas conduit to a liquid coolant through a heat exchanger. Conventional heat exchangers for exhaust gas conduits must interfere with the exhaust gas flow as little as possible since heat recovery is established in time periods that are shorter than the total time in which the exhaust gas is flowing. For this purpose, the heat exchanger intended for heat recovery is arranged adjacent to the exhaust conduit and in a bypass configuration. In this configuration, although there is a valve managing the passage of gas, regions in which heat is transferred to the heat exchanger are formed, even when this should not happen, and when there is a space between the heat exchanger and the exhaust conduit, exhaust gas recirculation regions are formed in regions which are not closed by the valve, giving rise to pressure drops. Heat transfer to the heat exchanger when the passage of the exhaust gas through the exchanger is not established leads to the liquid coolant being heated up, transferring heat to the engine cooling system when this should not happen and in an operating mode for which it is not sized. This brings about having to oversize the engine cooling system, discharging this extra heat, to prevent damage. The present invention is characterized by a particular configuration of the exhaust gas conduit incorporating a flow guide element to prevent this undesired recirculation, allowing subsequent energy optimization of the heat recovery device.

## Description

### Object of the Invention

The present invention relates to a heat recovery system for internal combustion engines which is arranged in an exhaust gas conduit. The system allows transferring heat from the exhaust gas conduit to a liquid coolant through a heat exchanger.

Conventional heat exchangers for exhaust gas conduits must interfere with the exhaust gas flow as little as possible since heat recovery is established in time periods that are shorter than the total time in which the exhaust gas is flowing. For this purpose, the heat exchanger intended for heat recovery is arranged adjacent to the exhaust conduit and in a bypass configuration. In this configuration, although there is a valve managing the passage of gas, regions in which heat is transferred to the heat exchanger are formed, even when this should not happen, and when there is a space between the heat exchanger and the exhaust conduit, exhaust gas recirculation regions are formed in regions which are not closed by the valve, giving rise to pressure drops. Heat transfer to the heat exchanger when the passage of the exhaust gas through the exchanger is not established leads to the liquid coolant being heated up, transferring heat to the engine cooling system when this should not happen and in an operating mode for which it is not sized. This brings about having to oversize the engine cooling system, discharging this extra heat, to prevent damage.

The present invention is characterized by a particular configuration of the exhaust gas conduit incorporating a flow guide element to prevent this undesired recirculation, allowing subsequent energetic optimization of the heat recovery device.

### Background of the Invention

One of the fields of the art that has been subjected to intensive development is the field of heat recovery devices intended for recovering the heat released by an internal combustion engine through exhaust gases. If the heat is not recovered from the exhaust gases, said heat ends up in the atmosphere, giving rise to very low global engine performance with respect to the energy released by the fuel in the combustion process.

Recovering the heat from exhaust gases allows a later usage as a heat source, for example in a Rankine cycle for obtaining mechanical energy in a shaft. The mechanical energy provided by the internal combustion engine plus the energy from the Rankine cycle considerably increases global system efficiency.

There are various heat recuperators with different applications to either, as mentioned, provide a heat source for a Rankine cycle or provide heat in short time periods with uses such as reducing the oil heating time of the engine so that it operates at operating conditions as soon as possible or as heating for the passenger compartment. These are just a few of many examples.

Internal combustion engine performance depends on, among other variables, the few losses of the exhaust conduit. Throttling the exhaust conduit with the presence of elements raising the exhaust gas flow resistance involves negatively affecting performance.

When the purpose of the heat exchanger is to recover heat at given short time periods with respect to the engine operating mode, said exchanger is arranged in a bypass configuration so that the gas flow runs in a normal manner with the minimum number of elements in its path, and so that there are fewer losses in this path due to a pressure drop.

In this configuration, when the flow passes through the heat exchanger, the inlet into and outlet from the heat exchanger show a somewhat tortuous S-shaped configuration generating losses; nevertheless, this drawback is accepted in exchange for favoring a configuration with the direct passage of the exhaust gas, without transferring heat, given that the heat recovery time is much shorter than the time in which the exhaust gas passes without releasing heat, such as for example when it is released directly into the atmosphere.

The configuration of a heat exchanger for heat recovery in an exhaust conduit is known through the PCT application with number WO2014/131828, where resistance to the passage of exhaust gas has been minimized by configuring the heat exchanger like a device that can be coupled to the exhaust conduit through two windows, a first window for entry of the exhaust gas into the exchanger and a second window for the return of the cooled gas to the exhaust conduit.

This configuration is possible because the valve managing the exhaust gas bypass is configured from a flap which enters through the window, establishing support on the inner wall of the exhaust conduit, adapting a shape that adheres to said wall.

The described configuration places the bypass management valve upstream such that downstream there is located access to the outlet for the cooled gas, i.e., the gas that has already released heat to the liquid coolant through an exchange block, through which it returns to the exhaust conduit through the second window, the one arranged downstream.

Although this configuration allows the exhaust conduit to not have any inwardly-projecting element to apply resistance to the passage of the exhaust gas, the cavity formed by the space existing between the second window and the heat exchange block gives rise to a sudden expansion in the passage of the exhaust gas circulating through the exhaust gas conduit, giving rise to recirculation regions.

Throughout this description heat exchange block will refer to the segment of the heat exchanger which is formed by the heat exchange tube bundle and extends between two end baffles if it has baffles. In this particular case, according to the direction of passage of the hot gas through the tube bundle, the heat exchange block is mounted between the mentioned end baffles. It is therefore the space bound between the cooled gas outlet end baffle and the second window of the exhaust conduit which gives rise to a cavity where the exhaust gas generates a recirculation region when the heat exchanger is not used. In any other case where end baffles are not used, the heat exchange block is mounted between two sections where the heat exchange surfaces are bound between the hot gas and the liquid coolant.

The effect of this recirculation flow in the identified region causes a pressure drop due to the increased resistance and an increase in the temperature of the heat exchange block on the outlet side due to the direct impact of the hot gas. There are configurations of the exchange block, for example configured in the form of stacked flat tubes (referred to as a stacked cooler), which allow extending the exchange region to the very access window for entering the exhaust gas conduit. In this case, the recirculation region is minimized or even disappears, but the problem of the undesired heating of the liquid coolant remains due to the occurrence of exhaust gas flows the streamlines of which reach the exchange block.

This same situation occurs when the bypass valve is located downstream. The closure of the exhaust conduit by means of the bypass valve causes the flow upstream to be diverted to the heat exchanger or at least that there are streamlines reaching the exchange block. Nevertheless, in this other position of the valve, even though the valve is open for the passage of the exhaust gas without heat exchange, there is also still a region upstream for access to the exchange block, causing the subsequent heating of the coolant fluid, and in most situations a region which is defined in this case by the space between the first window and the heat exchange block, giving rise also to pressure drops.

The present invention prevents this problem by proposing a specific configuration that prevents the undesired heating of the exchange block.

### Description of the Invention

The present invention relates to a heat recovery system that is suitable for being located in a conduit for the passage of exhaust gas such that during operation, the exhaust gas passes with minimal pressure drop, and in certain time periods it is diverted through a heat exchanger by means of a bypass configuration in order to transfer some of its heat to a liquid coolant. The heat transferred to the liquid coolant allows recovering part of the energy that would otherwise remain in the exhaust gas, and its final destination would be the atmosphere.

In a secondary use, the gas cooled after heat recovery can be used as EGR gas in an EGR (exhaust gas recirculation) system. In this case, a branch in the exhaust gas system, or more specifically in the outlet area of the exchanger, incorporates an EGR valve for managing the amount of cooled gas that is introduced back into the intake of the internal combustion engine.

The heat recovery system comprises:
- *an exhaust gas conduit extending according to an axial direction and comprising an exhaust gas inlet and an exhaust gas outlet,*
- *a heat exchanger comprising a heat exchange block wherein heat transfer between the exhaust gas and a liquid coolant is established, the heat exchanger being in fluid communication with the exhaust gas conduit through:*
   ∘ *at least a first intake opening located in the wall of the exhaust gas conduit corresponding with the inlet into the heat exchanger, and*
   ∘ *at least a second exhaust opening located in the wall of the exhaust gas conduit corresponding with the outlet from the heat exchanger,*
   *wherein each opening extends according to the axial direction between a first reference plane, transverse to the axial direction, located upstream according to the exhaust gas flow, and a second reference plane, transverse to the axial direction, located downstream according to the exhaust gas flow.*

The exhaust gas conduit can be the exhaust conduit or conduits located in an EGR system through which the exhaust gas circulates at a high temperature, hence the name "exhaust gas conduit." In a segment of this exhaust gas conduit, the heat exchanger is arranged in a bypass configuration such that during operation, the exhaust gas circulates through the exhaust gas conduit passing through the heat exchanger when heat is being recovered and without passing through the heat exchanger when heat is not recovered, without the gas passing through a segment of the exhaust gas conduit. When the exhaust gas passes through the heat exchanger, part of the heat of the exhaust gas is transferred to the liquid coolant for subsequent use of this thermal energy.

The heat exchanger comprises a heat exchange block, wherein this heat exchange block is defined between two end baffles in most of the embodiments herein. Entry of the hot gas from the exhaust gas conduit to the heat exchanger and the exit of the cooled gas from the heat exchanger to the exhaust gas conduit are established through two openings in said exhaust gas conduit.

Between these openings in the exhaust gas conduit and the heat exchange block, in most of the embodiments, there are two spaces which communicate the exhaust gas conduit with the inlet and outlet of the heat exchanger, respectively.

By way of reference, following the longitudinal direction defined by the direction of the exhaust gas flow, each of the openings extends between two section planes, i.e., the so-called first plane and the so-called second plane, transverse to the exhaust gas conduit. The first plane is conveniently located upstream and the second plane is conveniently located downstream with respect to the exhaust gas flow.

In addition to these components, the system comprises:
- *a valve defining two end positions:*
   ∘ *a first position, wherein the exhaust gas flow travels through the exhaust gas conduit without passing through the heat exchanger, and*
   ∘ a second position, wherein the exhaust gas flow passes through the heat exchanger, a cooled exhaust gas flow thereby being obtained.

In many of the embodiments of the two spaces identified above, between an opening and the heat exchange block, one of them is closed by the valve when it is located in the first position. Since the other opening does not have a valve, it shows the space between the exchange block and the opening as if it were a cavity of the exhaust gas conduit. Therefore, when the exhaust gas passes through the exhaust gas conduit without heat recovery, the cavity acts like a sudden expansion, giving rise to a recirculation flow. In those examples in which there is not a space between the opening and the exchange block, when the exhaust gas flow lines pass in the non-heat recovery operating mode, they also have easy access to the heat exchange block, raising the temperature of the liquid coolant without the need for a recirculation region.

The recirculation flow generates pressure drops in the exhaust gas conduit the entire time that there is no heat recovery, and this recirculation flow also generates an undesired heat transfer from the hot exhaust gas flow to the liquid coolant when the valve is in the non-heat recovery position (also referred to as direct exhaust position).

For this purpose, the system according to the invention also comprises:
- *a flow guide housed in the exhaust gas conduit extending along a segment in the axial direction and leading the exhaust gas flow at least from the first reference plane of one of the openings to reduce or eliminate the exhaust gas flow in the first position of the valve through said opening to the exchange block of the heat exchanger.*

When the valve is located in the first position, the flow guide prolongs the streamlines downstream without the flow impacting the heat exchange block, preventing the heating of the liquid coolant. Additionally, in those examples in which there is a cavity between the opening and the exchange block, the flow guide also prevents or minimizes the occurrence of recirculation regions, preventing the pressure drops brought about by a sudden expansion. The flow guide interferes minimally with the exhaust gas flow, slightly increasing pressure drops with respect to a conduit without openings or cavities, but nevertheless, the technical benefit obtained far overshadows the drawbacks of these minimal drops.

The flow guide does not close the opening where it is located, such that fluid communication in the form of a channel is maintained between the surface of the flow guide and the opening, such that this channel allows the passage of a considerable flow volume between the exhaust gas conduit and the heat exchange block. When the valve is located in the opening located upstream, the flow guide favors the cooled gas exiting with an outlet direction according to the direction of the exhaust gas flow. When the valve is located in the opening located downstream, the flow guide does not prevent the hot gas entering the space located between the opening and the heat exchange block of the heat exchanger, allowing heat recovery in the second position of the valve. In this second case, the flow guide preferably has a length such that it does not exceed the second reference plane.

The various configurations of the system are described in the detailed description of the invention, many of which are shown in the drawings.

### Description of the Drawings

The foregoing and other features and advantages of the invention will be more clearly understood based on the following detailed description of a preferred embodiment provided only by way of illustrative and non-limiting example in reference to the attached drawings.

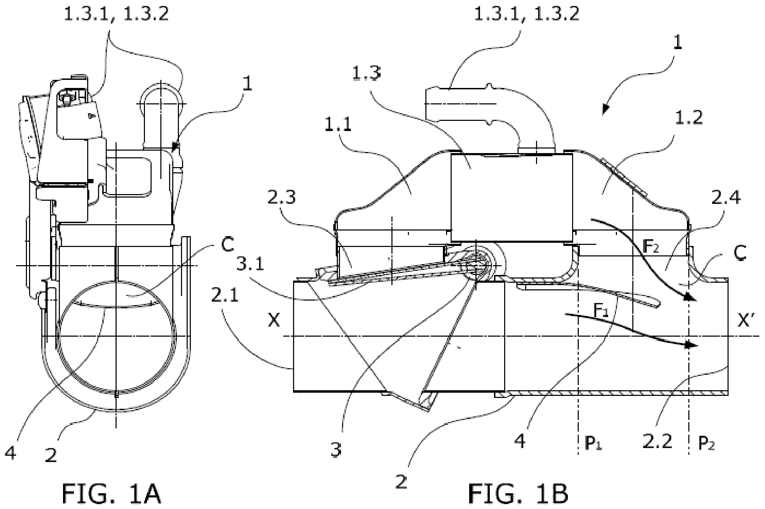

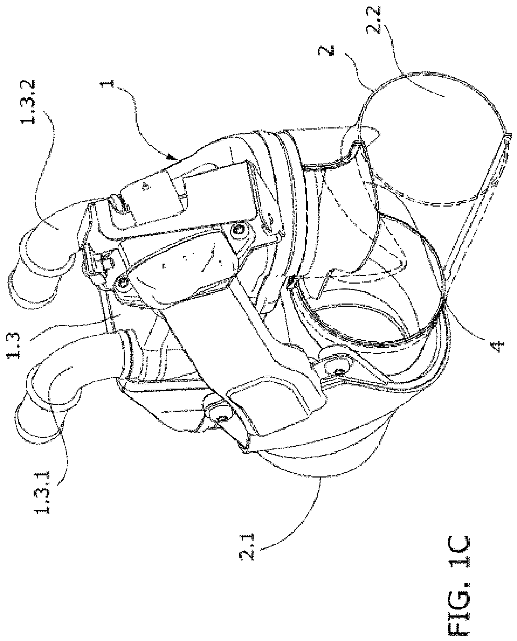

Figures 1A, 1B and 1C show a first embodiment of the invention. Figure 1A is a right view taken according to the direction of the exhaust gas conduit. Figure 1B is a front section view that allows showing the inside of the elements forming the system. Figure 1C is a perspective view of the same embodiment where a section of the exhaust conduit is shown in a discontinuous line and allows seeing the components housed inside it through same.

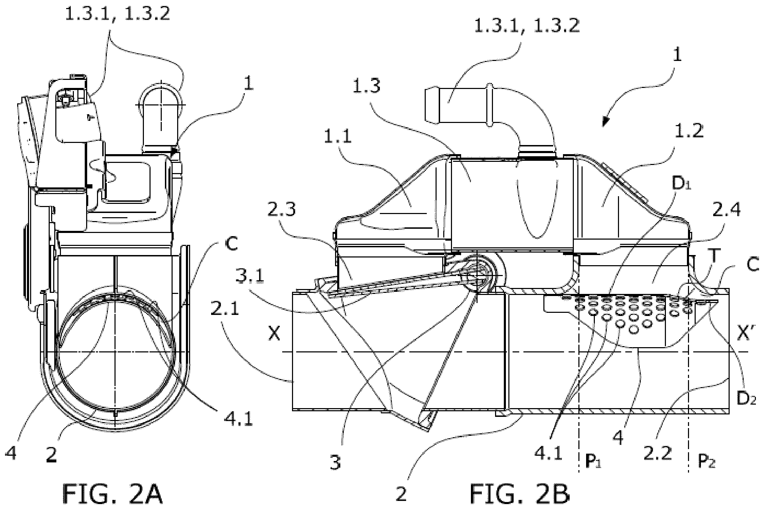

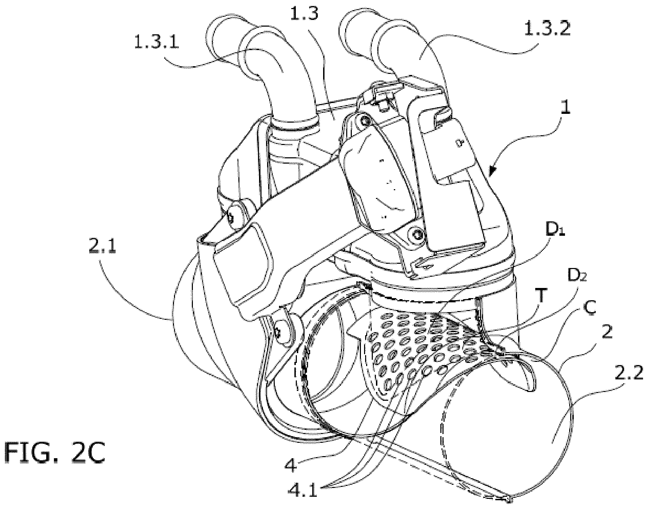

Figures 2A, 2B and 2C show a second embodiment of the invention. Figure 2A is a profile view taken according to the direction of the exhaust gas conduit. Figure 2B is a front section view that allows showing the inside of the elements forming the system. Figure 2C is a perspective view of the same embodiment where a section of the exhaust conduit is shown in a discontinuous line and allows seeing the components housed inside it through same, particularly the perforated configuration of the flow guide.

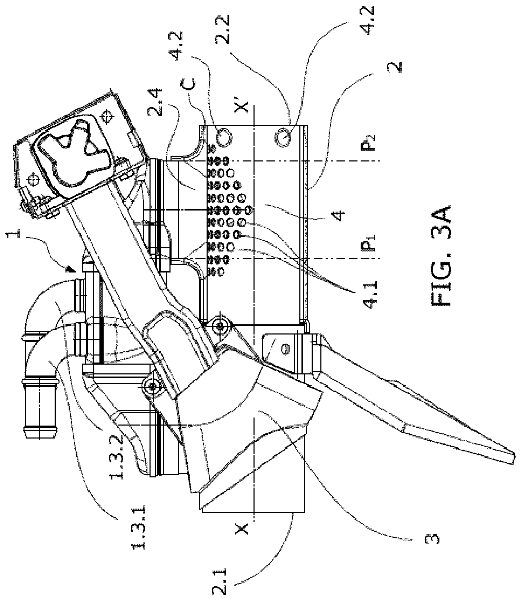

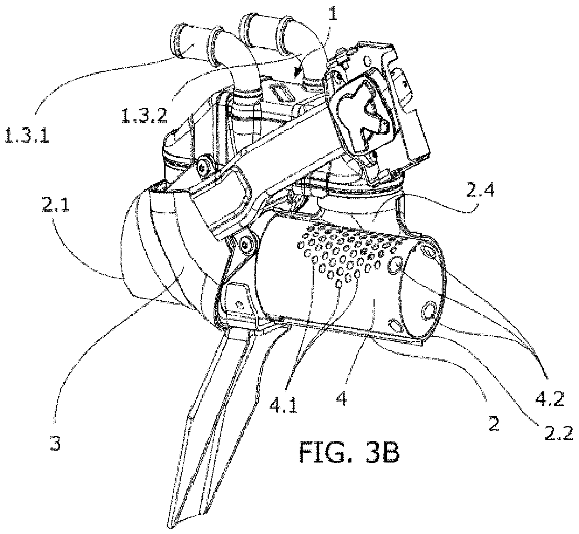

Figures 3A and 3B show a third embodiment where the flow guide has a perforated tubular configuration and additionally includes support elements inside the exhaust gas conduit. Figure 3A shows a front view with the region of the flow guide sectioned in the exhaust gas conduit part to allow seeing the inside. Figure 3B is a perspective view of the same embodiment and the same section.

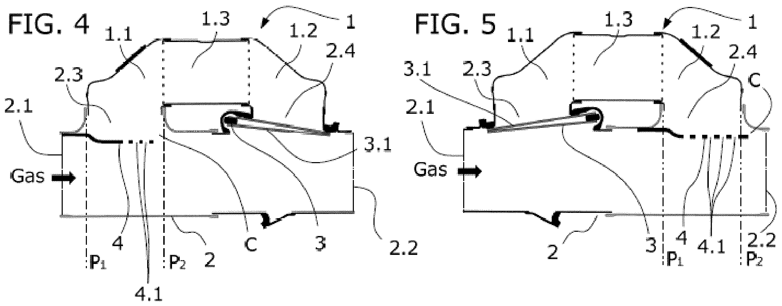

Figure 4 shows a schematic depiction of the section of another embodiment where the valve is located in the opening located downstream according to the exhaust gas flow and the flow guide is located in the opening corresponding to the heat exchanger inlet.
Figure 5 shows a schematic depiction of the section of another embodiment where the valve is located in the opening located upstream according to the exhaust gas flow, in the opening corresponding to the heat exchanger inlet, and the flow guide is located in the opening located downstream, in the cooled gas outlet.

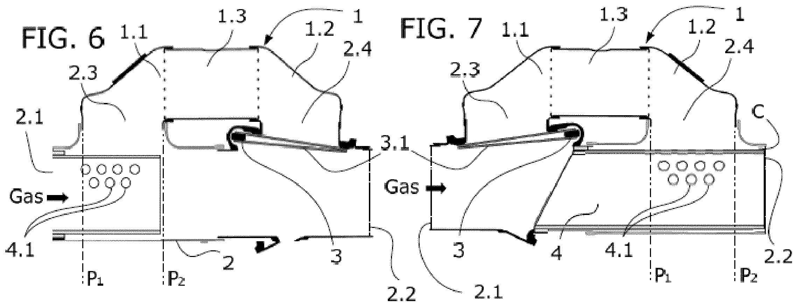

Figure 6 shows a schematic depiction of the section of another embodiment where the valve is located in the opening located downstream according to the exhaust gas flow and the flow guide, configured in a tubular shape, is located in the opening corresponding to the heat exchanger inlet.
Figure 7 shows a schematic depiction of the section of another embodiment where the valve is located in the opening located upstream according to the exhaust gas flow, in the opening corresponding to the heat exchanger inlet, and the flow guide is configured in a tubular shape and located in the opening located downstream, in the cooled gas outlet.

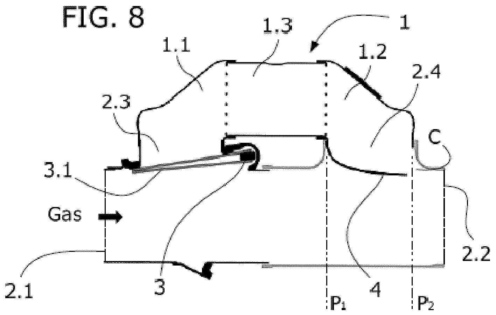

Figure 8 shows a schematic depiction of the section of another embodiment where the flow guide is partially housed in the opening where it modifies the exhaust gas flow with the fixing in the wall of said opening.

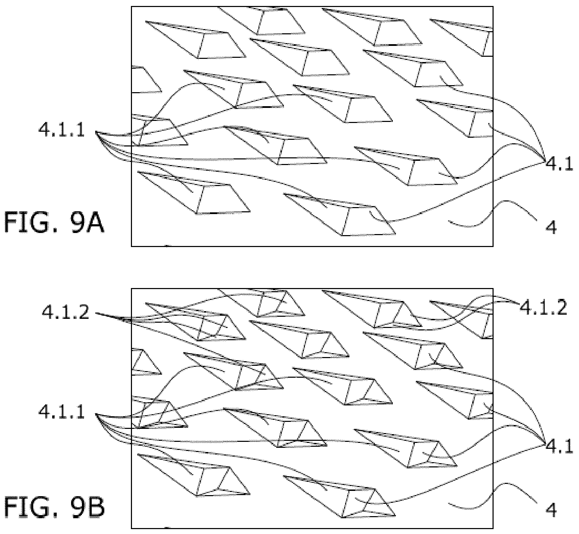

Figures 9A and 9B show two different schematic depictions of the surface of a flow guide according to respective embodiments where said surface is in the form of a grater.

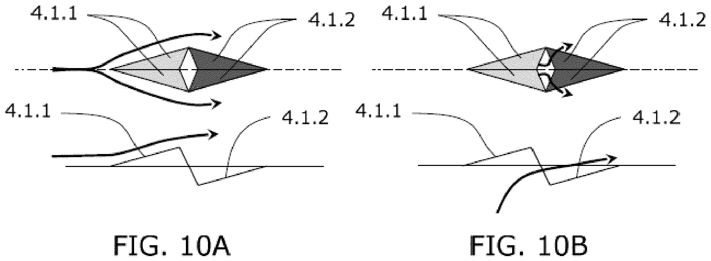

Figures 10A and 10B show two schematic depictions of the surface of a flow guide with an embodiment of the surface in the form of a grater. A top view is shown in the upper part and a section view is shown in the lower part.

### Detailed Description of the Invention

According to the first inventive aspect, the present invention relates to a heat recovery system that can be used in an internal combustion engine which allows recovering part of the heat from the exhaust gas.

The recovered energy can be used to obtain mechanical energy, for example through a Rankine cycle, and in turn transformed into electric energy. This electric energy allows driving electric engines or can be used in auxiliary devices in the vehicle.

The recovered heat can also be used, without prior transformation, for heating either the passenger compartment of the vehicle or parts of the engine during warm-up in order for said parts to reach the operating temperature as soon as possible. These are just a few examples of the use of the recovered energy.

The most common use of this system is the recovery of heat from the exhaust gas which would otherwise end up being released into the atmosphere. Nevertheless, given that the exhaust gas has been cooled once the heat is recovered an advantage of the described system is that the cooled gas can be used as an EGR system. In other words, the cooled gas can be diverted to the intake of the internal combustion engine with the flow volume control established by means of an EGR valve.

Figures 1A and 1B and the perspective view of Figure 1C show a first embodiment of the invention. Figure 1B shows a front section view of an exhaust gas conduit (2) extending according to a longitudinal direction identified as X-X'.

The exhaust gas flow should not be perturbed as far as possible to reduce pressure drops given that the time during which the exhaust gas flow circulates through the conduit without requiring heat recovery is longer than the time in which it is required for there to be heat recovery.

For this purpose, the heat exchanger (1) that allows heat recovery by means of transferring thermal energy from the hot exhaust gas to a liquid coolant is arranged in a bypass configuration with respect to the exhaust gas conduit (2). The bypass configuration chosen in this embodiment places the heat exchanger (1) parallel to the exhaust gas conduit (2), where said heat exchanger (1) is fed from an exhaust gas intake opening (2.1) to an exhaust gas exhaust opening (2.2) with a space configured to cause a 90° change in the flow of the hot gas. In other words, the exhaust gas flow follows an approximately straight path when it does not pass through the heat exchanger (1) and follows a tortuous path, i.e., having an alternating turn, to enter and exit the heat exchanger (1) when the passage of the exhaust gas through the heat exchanger (1) is required, recovering part of its thermal energy.

The heat exchanger (1) according to this embodiment and all the heat exchangers shown in the embodiments discussed below are configured by means of a heat exchange tube bundle extending between two end baffles. The region bound between the end baffles is the region where the heat exchange occurs, and this heat exchange segment will be identified as exchange block (1.3) of the heat exchanger (1). According to other embodiments, the heat exchange block (1.3) is configured by a stack of flat tubes without end baffles. In this case, the exchange block is limited by the ends of the flat tubes, where the latter can fill part of the curve required for the bypass configuration, reducing or even eliminating the possible recirculation regions, but making the exchange block more accessible to the flow passing through the exhaust gas conduit in the non-heat recovery mode.

Continuing with the embodiment shown in Figures 1A, 1B and 1C, the heat exchange block (1.3) is in fluid communication with the exhaust gas conduit (2) by means of an intake manifold (1.1) and an exhaust manifold (1.2).

The exhaust gas conduit (2) comprises two openings (2.3, 2.4), a first intake opening (2.3) located upstream and a second exhaust opening (2.4) located downstream according to the direction of the exhaust gas flow.

The intake manifold (1.1) places the first intake opening (2.3) in fluid communication with the inlet of the exchange block (1.3), and the exhaust manifold (1.2) places the outlet of the exchange block (1.3) in fluid communication with the second exhaust opening (2.4).

The exchange block (1.3) of the heat exchanger (1) comprises an inlet conduit (1.3.1) and an outlet conduit (1.3.2) for the liquid coolant. The liquid coolant enters the exchange block (1.3) of the heat exchanger (1), covering the tubes of the tube bundle. The heat from the exhaust gas that passes through the exchange block (1.3) is transferred to the liquid coolant through the surface of the tubes of the tube bundle, such that the recovered heat exits the heat recovery system with the liquid coolant at a higher temperature.

As described above, the cooled exhaust gas flow exits the heat exchange block (1.3) and passes to the exhaust gas conduit (2), passing through the exhaust manifold (1.2) passing through the second exhaust opening (2.4).

According to this embodiment, the passage of the exhaust gas through either the exhaust gas conduit (2) or the heat exchanger (1) is determined by a valve (3) located on the inlet side of the heat exchanger (1). The valve (3) has a flap (3.1) that can adopt two end positions:
- a first position, wherein the exhaust gas flow travels through the exhaust gas conduit (2) without passing through the heat exchanger (1), and
- a second position, wherein the exhaust gas flow passes through the heat exchanger (1), a cooled exhaust gas flow thereby being obtained.

In the first position, i.e., the position shown in Figure 1B, the flap (3.1) closes the first intake opening (2.3) and allows the entire flow to pass through the exhaust gas conduit (2). In the second position, the flap (3.1) is supported on a second seat closing the passage through the exhaust gas conduit (2), forcing the flow to pass through the first intake opening (2.3) .

In the first position, the exhaust gas flow goes past the position of the valve (3) and reaches, according to the longitudinal direction, the position where the second exhaust opening (2.4) communicating with the exhaust manifold (1.2) of the heat exchanger (1) is located. This exhaust manifold (1.2) defines a space that the flow would run into abruptly were it not for a flow guide (4) which prolongs the path of the streamlines of the exhaust gas flow.

According to the state of the art, the cavity forming the space defined by the exhaust manifold (1.2) gives rise to a recirculation region which introduces hot gas circulating through the exhaust gas conduit and makes it directly impact the outlet of the exchange block (1.3). This hot gas raises the temperature of the liquid coolant in an undesired manner, which may give rise to the need to oversize the engine cooling system.

According to this embodiment, the exhaust gas flow goes past the cavity following a path like the one indicated by means of the arrow F₁ and continues downstream of the second exhaust opening (2.4).

Two planes transverse to the exhaust gas conduit (2), i.e., a first plane (P₁) located at the point from where the second exhaust opening (2.4) starts and a second plane (P₂) located at the point where the second exhaust opening (2.4) ends, considering the direction of the exhaust gas flow (2) according to longitudinal direction X-X', are identified in said Figure 1B. The first plane (P₁) and the second plane (P₂) can be defined similarly and with the same criterion for the first intake opening (2.3).

In this particular case, the flow guide (4) is configured by means of a sheet metal, although the use of other material is possible, and it is attached with the exhaust gas conduit (2) through a region located upstream of the first plane (P₁). Once the exhaust gas flow reaches the position of the flow guide (4), its path is prolonged without entering the cavity generating the presence of the exhaust manifold (1.2). In this embodiment, the flow guide (4) is furthermore configured like a baffle since it has a curvature that leads to the exhaust gas flow moving away from the second exhaust opening (2.4).

In this embodiment, the configuration of the flow guide (4) is according to a surface which shows a first curvature, which is inwardly concave with respect to the exhaust gas conduit (2), that adapts to the shape of the inner wall of the exhaust gas conduit (2), and following the longitudinal direction downstream, the curvature of the flow guide (4) changes to be inwardly convex with respect to the exhaust gas conduit (2), i.e., inwardly concave with respect to the cavity formed by the second exhaust opening (2.4).

The technical effect of this change in curvature is the fact that it favors the flow exiting the heat exchanger when the valve is in the second position, i.e., in heat recovery mode. The arrow F₂ shows how the flow guide (4) diverts the flow to the right, according to the orientation of Figure 1B, to the exhaust gas outlet (2.2), forming a through channel (C). The second curvature favors the configuration of the through channel (C) for the cooled gas.

Other embodiments have a different change in curvature, for example from a flat configuration, for example, which is particularly suitable when the conduit has a polygonal section, to a curved configuration with a single curvature.

According to another embodiment, a flow guide (4) with a single curvature, i.e., with no change in curvature, is used.

In this embodiment, the final end of the flow guide (4) ends before reaching the second plane (P₂) to leave a wide channel (C) that allows the cooled gas to exit.

Figure 1A shows the through channel (C) for the cooled gas formed by the flow guide (4), and also the curvature of the final end to favor the exit of said cooled gas.

Figures 2A, 2B and 2C show a second embodiment coinciding with the first embodiment in all the components except for the configuration of the flow guide (4).

In this particular case, the flow guide (4) is configured like punched and stamped sheet metal, but according to other embodiments it could be made of another material and have a cylindrical shape adhered to the inner wall of the exhaust gas conduit (2).

In a first upstream segment, the flow guide (4) is cylindrical and has a diameter (D₁) coinciding with the internal diameter of the exhaust gas conduit (2), reducing the degree of interference in the exhaust gas flow (2) to a minimum when the valve is in the first position.

The flow guide has downstream a smaller diameter (D₂) after an intermediate transition segment (T) between the two diameters (D₁, D₂). According to this embodiment, the final end is prolonged downstream past the second plane (P₂) such that an annular channel (C) is formed between the cylindrical surface and the inner wall of the exhaust gas conduit.

This through channel (C) between the flow guide (4) and the exhaust gas conduit (2) allows the exit of the cooled gas with an increased section, making the exit thereof easier when the valve (3) is located in the second end position in heat recovery mode.

To increase the passage section, the flow guide (4) in this embodiment comprises a plurality of perforations (4.1) increasing the passage section offered by the channel (C) defined between the flow guide (4) and the exhaust gas conduit (2) .

Figure 2A allows showing the annular shape of the through channel (C) and it also shows some of the perforations (4.1) located in the transition segment (T) since the surface thereof is somewhat inclined to pass from the larger diameter (D₁) to the smaller diameter (D₂).

Figures 3A and 3B show a third embodiment where the valve (3) is located on the side of the first intake opening (2.3) and the flow guide (4) located on the side of the second exhaust opening (2.4).

The flow guide (4) has a tubular configuration, with a fixation located upstream of the first plane (P₁) and being prolonged downstream of the second plane (P₂). According to this configuration, the exhaust gas flow (2) is led through the tubular segment of the flow guide (4) past the position of the second exhaust opening (2.4), not giving the exhaust gas flow the chance to recirculate in the space formed by the exhaust manifold (1.2) .

The diameter of the flow guide (4) is smaller than the diameter of the inner wall of the exhaust conduit (2), giving rise to an annular channel (C) for the passage of the cooled gas exiting the second exhaust opening (2.4) of the heat exchanger to the exhaust gas conduit.

Even though according to one embodiment this flow guide (4) having a tubular configuration can be cantilevered; in the embodiment shown in Figures 3A and 3B, the final end of the tubular segment comprises support protuberances (4.2) for supporting the tubular segment on the inner wall of the exhaust gas conduit (2), assuring the coaxial arrangement of the end and preventing damage in the attachment due to vibrations of the tubular segment, which would otherwise be cantilevered. An alternative to this configuration places the protuberances on the inner wall of the exhaust gas conduit (2) for support on the final end of the flow guide (4).

Figure 4 schematically shows the front section view according to another embodiment where the valve (3) is located in the second exhaust opening (2.4). The first position of the flap (3.1) prevents the passage of the exhaust gas (2) through the opening of the heat exchanger, allowing passage through the exhaust gas conduit (2).

In this position of the flap (3.1), the intake manifold forms a cavity that is accessible through the first intake opening (2.3), which would give rise to a hot gas recirculation flow that would reach the exchange block (1.3) if the flow guide (4) located in the first intake opening (2.3) were not provided.

In this embodiment, the flow guide (4) is attached to the exhaust conduit (2) through an attachment region located upstream of the first plane (P₁) and is prolonged to a position that does not reach the position of the second plane, (P₂) giving rise to a through channel (C).

In this configuration where the valve (3) is located in the second exhaust opening (2.4), the preferred shape of the flow guide (4) is such that it does not reach the second plane (P₂) to prevent the passage of the exhaust gas to be cooled in the second position of the valve (3) from having to turn and move forward in the opposite direction until reaching the inner space of the intake manifold (1.1).

Additionally, this schematic depiction also shows a plurality of perforations to favor the passage of the gas to be cooled when the valve (3) is located in the second position, i.e., establishing the passage of the exhaust gas through the heat exchanger (1).

Figure 5 shows an embodiment which allows comparing the two alternative configurations with Figure 4, either with the valve (3) being located in the first intake opening (2.3) and the flow guide (4) being located in the second exhaust opening (2.4) (embodiment shown in Figure 5), or with the valve (3) being located in the second exhaust opening (2.4) and the flow guide (4) being located in the first intake opening (2.3).

Figures 6 and 7 show two embodiments with the alternative configurations corresponding to Figures 4 and 5 where the flow guides (4) have a tubular configuration and perforations (4.1) to favor the passage of gas through said flow guide (4).

Figure 6 shows the flow guide (4) ending before the second plane (P₂) to make it easier for the exhaust gas to pass into the heat exchanger (1) in the second position of the valve (3) for the heat recovery mode, even if it works by moving the gas away from this region in the direct exhaust mode, and Figure 7 shows the flow guide (4) ending after or downstream of the second plane (P₂) to hinder exhaust gas recirculation when the valve (3) is located in the first end position, leaving an annular channel (C) for the passage of the cooled gas exiting the heat exchanger (1) towards the exit of the exhaust gas conduit (2).

Figure 8 shows another embodiment that is compatible with the distributions of the valve (3) and flow guide (4) described above, where the flow guide (4) is attached to the inner wall of the opening, in this case the second exhaust opening (2.4) . In this configuration, it is possible to position the start of the flow guide (4) without invading the section of the exhaust gas conduit (2), reducing the pressure drop to a greater extent when the valve (3) is located in the first end position in direct exhaust mode.

According to another embodiment, the configuration of the perforations (4.1) in the flow guide (4) is embossed in the form of a grater, i.e., the surface around the edge of the perforation (4.1) projects away from the surface of the flow guide (4). When it is indicated that the relief is in the form of a grater, it refers to kitchen graters, for example for grating bread, cheese, etc.

Figure 9A schematically shows a surface with a relief in the shape of a grater, with perforations (4.1), where the relief shows first projections (4.1.1) of the surface around each perforation (4.1) projecting away from the upper surface of the flow guide (4). These first projections (4.1.1) are located on only one of the faces of the surface of the flow guide (4) and are oriented in the same direction with respect to the surface of the guide. The configuration these first projections (4.1.1) adopt is defined by means of two triangles sharing a common vertex.

Figure 9B schematically shows a surface with a relief in the form of a grater, with perforations (4.1), where the relief shows the same first projections (4.1.1) of the surface around each perforation (4.1) as those shown in Figure 9A, and it additionally shows for each perforation (4.1) a second complementary projection (4.1.2) located on the side opposite the first projection (4.1.1) following the orientation of this first projection (4.1.1), and projecting towards the opposite face. The configuration these second projections (4.1.2) adopt is also defined by means of two triangles sharing a common vertex, just that they are located on the other side of the main surface defining the flow guide (4).

With this configuration in the shape of a grater, in the event of a tangential flow with respect to the surface where the perforations (4.1) are located, flow from one side of the surface to the other side through the perforation is favored due to the presence of the projections. The direction of the flow that is favored depends on if it is projected to one side of the surface or the other and on if this projection is located upstream or downstream of the perforation. In the preferred configuration, the grater configuration is oriented so that the flow favors the passage of the cooled gas into the exhaust gas conduit (2); that is, the passage from the inside of the exhaust gas conduit (2) to the cavity formed by the corresponding manifold (1.1, 1.2) is hindered.

Figures 9A and 9B are drawn using just lines; nevertheless, Figures 10A and 10B use, in addition to lines, two tones of grey, a light grey and a dark grey, to more clearly distinguish the surfaces projecting in high relief and in low relief, respectively, on the surface of the flow guide (4).

The upper part of Figures 10A and 10B schematically shows a perforation (4.1) of the type configured in the shape of a grater seen from top, i.e., the surface of the flow guide (4) coincides with the plane of the paper on which the figure is depicted.

The lower part of each figure shows the same perforation (4.1) according to a section according to a plane perpendicular to the surface of the flow guide (4) and it passes along the length of the surface in relief in the shape of a grater. In these particular cases, the section corresponds to the midline of the perforation (4.1), shown with a horizontal orientation, as it is identified in the upper part by means of a discontinuous line.

In both figures the upper view corresponds to the surface of the flow guide seen from the exhaust gas conduit (2), and therefore the space communicating with the heat exchange block (1.3) is located behind the surface.

Following the same criterion, in both figures the lower view shows the surface of the flow guide (4) according to a horizontal line that leaves the space located inside the exhaust gas conduit (2) above said line and leaves the space communicating with the heat exchange block (1.3) below said line.

Figure 10A schematically depicts flow lines when the device operates in the bypass mode, where the first projections (4.1.1) depicted in light grey prevent the flow from passing from one side of the surface of the flow guide (4) to the other. The flow lines go around the perforation as a result of the deflection of the first projections (4.1.1).

Figure 10B schematically depicts flow lines when the device operates in the recovery mode. The path for the flow coming from the heat exchange block (1.3) to pass from one side of the surface of the flow guide (4) to the other is aided because the second projections (4.1.2) are located in its path, diverting it and forcing the passage from one side to the other.

## Claims

1. A heat recovery system, comprising:
- an exhaust gas conduit (2) extending according to an axial direction (X-X') and comprising an exhaust gas inlet (2.1) and an exhaust gas outlet (2.2),
- a heat exchanger (1) comprising a heat exchange block (1.3) wherein heat transfer between the exhaust gas and a liquid coolant is established, the heat exchanger (1) being in fluid communication with the exhaust gas conduit (2) through:
o at least a first intake opening (2.3) located in the wall of the exhaust gas conduit (2) corresponding with the inlet into the heat exchanger (1), and
o at least a second exhaust opening (2.4) located in the wall of the exhaust gas conduit (2) corresponding with the outlet from the heat exchanger (1),
wherein each opening (2.3, 2.4) extends according to the axial direction between a first reference plane (P₁), transverse to the axial direction (X-X'), located upstream according to the exhaust gas flow, and a second reference plane (P₂), transverse to the axial direction (X-X'), located downstream according to the exhaust gas flow;
- a valve (3) defining two end positions:
∘ a first position, wherein the exhaust gas flow travels through the exhaust gas conduit (2) without passing through the heat exchanger (1), and
∘ a second position, wherein the exhaust gas flow passes through the heat exchanger (1), a cooled exhaust gas flow thereby being obtained,
wherein the system further comprises:
- a flow guide (4) housed in the exhaust gas conduit (2) extending along a segment in the axial direction (X-X') and leading the exhaust gas flow at least from the first reference plane (P₁) of one of the openings to reduce or eliminate the exhaust gas flow in the first position of the valve (3) through said opening (2.3, 2.4) to the exchange block (1.3) of the heat exchanger (1).

2. The system according to claim 1, wherein the flow guide (4) extends in the axial direction (X-X') past the second reference plane (P₂) of the opening (2.3, 2.4) forming a through channel (C) between the flow guide (4) and the exhaust gas conduit (2) for the passage of gas circulating through the exchange block (1.3).

3. The system according to claim 1, wherein the flow guide (4) extends in the axial direction (X-X') to a point located between the first reference plane (P₁) and the second reference plane (P₂) of the opening (2.3, 2.4) forming a through channel (C) between the flow guide (4) and the exhaust gas conduit (2) for the passage of gas circulating through the exchange block (1.3) .

4. The system according to any of the preceding claims, wherein the flow guide (4) is a deflector that moves the flow lines away from the opening (2.3, 2.4).

5. The system according to claim 4, wherein the deflector shows a surface with a single curvature.

6. The system according to claim 4, wherein the deflector shows a surface with a first curvature in a first upstream segment and a second curvature in a second downstream segment.

7. The system according to claim 6, wherein the deflector shows an inwardly concave surface with respect to the exhaust gas conduit (2) in a first upstream segment and an inwardly convex surface with respect to the exhaust gas conduit (2) in a second downstream segment.

8. The system according to any of the preceding claims, wherein the flow guide (4) has a tubular configuration having a smaller diameter (D₂) than diameter (D₁) of the exhaust gas conduit (2).

9. The system according to claim 8, wherein the flow guide (4) forms an annular through channel (C) between the flow guide (4) and the exhaust gas conduit (2).

10. The system according to any of the preceding, wherein the end of the flow guide (4) located downstream is cantilevered.

11. The system according to claim 8 or 9, wherein or either the end of the flow guide (4) located downstream is supported on the inner wall of the exhaust gas conduit (2) by means of protuberances (4.2) on the surface of the flow guide (4) or else the end of the flow guide (4) located downstream is supported on protuberances (4.2) located on the inner wall of the exhaust gas conduit (2).

12. The system according to any of the preceding claims, wherein the flow guide (4) comprises one or more perforations to make it easier for the gas to flow between the inside of the exhaust gas conduit (2) and the space between the opening and the exchange block (1.3) of the heat exchanger (1).

13. The system according to claim 12, wherein the surface of the flow guide (4) is configured in the shape of grater, i.e., with projections (4.1.1, 4.1.2) of the surface around one or more perforations (4.1) projecting at least towards one of the faces of said surface and with a specific orientation to favor the flow through the perforation (4.1) from one side of the surface to the opposite side and to hinder the flow in the opposite direction.

14. The system according to any of claims 1 to 13, wherein the valve (3) is located in the first intake opening (2.3) upstream of the flow guide (4) and the flow guide (4) is located in the second exhaust opening (2.4).

15. The system according to any of claims 1 to 13, wherein the valve (3) is located in the second exhaust opening (2.4) downstream of the flow guide (4) and the flow guide (4) is located in the first intake opening (2.3).

16. The system according to any of the preceding claims, wherein the heat exchanger (1) comprises a branch located downstream of the bypass and an EGR valve for feeding the internal combustion engine with the gas cooled by the heat exchanger (1).
